# EUROPEAN PATENT APPLICATION

(11) **EP 1 950 741 A2**
(43) Date of publication of application: **30.07.2008**
(21) Application number: 08150405.2
(22) Date of filing: 18.01.2008
(51) Int. Cl.: G11B 5/60

(54) **Device for control of the flying height of magnetic head in a hard disk drive apparatus and a control method therefor**

(30) Priority: 24.01.2007 KR 20070007655
(71) Applicant: Samsung Electronics Co., Ltd., Yeongtong-gu Suwon-si, Gyeonggi-do (KR)
(72) Inventor: Kim, Nam-guk, Dongan-gu, Anyang-si, Gyeonggi-do (KR); Chu, Sang-hoon, Giheung-gu,Yongin-si,Gyeonggi-do (KR); Kim, Young-shin, Songpa-gu, Seoul (KR)
(74) Representative: Grünecker, Kinkeldey, Stockmair & Schwanhäusser Anwaltssozietät

(57) **Abstract**

A hard disk drive apparatus (100) to control a flying height of a magnetic head (110) and a method thereof are provided. The hard disk drive apparatus (100) includes a disk (102), a magnetic head (110) to read data from the disk (102) or to record data on the disk (102), a flying height maintaining unit (210) to control a flying height of the magnetic head (110) and to uniformly maintain the flying height above the disk (102), and a controller (230) to control the flying height maintaining unit (210) to maintain a first height as the flying height of the magnetic head (110) in a seek mode, wherein the first height is greater than a second height at which a write operation or a read operation is performed by the magnetic head (110). The hard disk drive apparatus (100) to control a flying height of a magnetic head (110) and the method thereof to minimize Head Disc Interference (HDI) between the magnetic head (110) and the disk (102), due to decrease of the flying height of the magnetic head (110), which may occur in the seek mode of the magnetic head (110), so that performance degradation while recording and reading as a result of system deterioration can be prevented and reliability of a system can be improved.

## Description

### BACKGROUND OF THE INVENTION

### 1. Field of the Invention

The present general inventive concept relates to controlling a flying height (FH) of a magnetic head, and more particularly, to a hard disk drive apparatus to control a FH of the magnetic head and a method thereof.

### 2. Description of the Related Art

In general, a hard disk drive apparatus, which is a type of data storage device, reproduces data recorded on a disk by a magnetic head or records user data on a disk, thereby contributing to an operation of a computer system. Such a hard disk drive apparatus has gradually increased in capacity and density, and decreased in size. Accordingly, the Bit Per Inch (BPI)' and 'Track Per Inch (TPI)' are increasing, and thus a more elaborate mechanism is required.

However, the occurrence of a loose contact between a magnetic head and a disk prevents reliable performance of a disc drive. Such a problem can occur as a result of external factors such as temperature and pressure, and also as a result of structural characteristics of a disk drive itself, for example, a Thermal Pole Tip Protrusion (TPTP). A magnetic head for recording is formed of a metal material, and a slider supporting the magnetic head is formed of a non-metal material. The TPTP is a phenomenon in which, when a write current is applied to the magnetic head, the area around the pole is expanded due to a difference in a thermal expansion coefficient of a metal and a non-metal. Such a TPTP phenomenon introduces differences in flying heights while recording and reading data so that Head Disc Interference (HDI) occurs between the magnetic head and the disk, and reliability of a recording operation decreases.

In order to overcome such problems, a Flying height On Demand (FOD) device is currently introduced. The FOD device uniformly maintains a flying height (FH) of each magnetic head having a different FH. The FOD device adheres a separate coil to the inside of the magnetic head and then current is applied to the coil to heat the head, thereby forming an effective Air Bearing System (ABS) to control the FH. When the magnetic head is in a write mode or a read mode, the FOD device maintains the FH of the magnetic head to be lower than that of another mode in order to reduce an error in reading or writing data. The decrease of the FH generates data errors due to HDI between the magnetic head and the disk. Moreover, the disk can become scratched, and thus permanent damage can occur to the data of the corresponding region.

### SUMMARY OF THE INVENTION

The present general inventive concept, as defined by the independent claims, provides a hard disk drive apparatus to control a flying height of a magnetic head in order to prevent Head Disc Interference (HDI) between the magnetic head and the disk in a seek mode of the magnetic head which seeks to perform a write operation or a read operation.

The present general inventive concept also provides a method of controlling a flying height of a magnetic head in a hard disk drive apparatus.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a hard disk drive apparatus including a disk, a magnetic head to read data from the disk or to record data on the disk, a flying height maintaining unit to control a flying height of the magnetic head and to uniformly maintain the flying height above the disk, a controller to control the flying height maintaining unit to maintain a first height as the flying height of the magnetic head in a seek mode, wherein the first height is greater than a second height at which a write operation or a read operation is performed by the magnetic head.

After the seek mode is complete, the controller may control the flying height maintaining unit to maintain the second height as the flying height of the magnetic head in a write mode or a read mode.

Before the seek mode is complete, the controller may control the flying height maintaining unit to start decreasing the flying height of the magnetic head below the first height.

When a moving speed of the magnetic head, an acceleration of the magnetic head, a difference between a current position and a target track position, or current applied to a voice coil motor is smaller than a threshold, the controller may control the flying height maintaining unit to start decreasing the flying height of the magnetic head below the first height.

When the moving speed of the magnetic head, the acceleration of the magnetic head, the difference between a current position and a target track position, or the current applied to a voice coil motor is larger than a threshold, the controller may determine that the magnetic head is in the seek mode and control the flying height maintaining unit.

The controller may disable the flying height maintaining unit so that the first height is a greatest height among flying heights of the magnetic head in the seek mode, and enable the flying height maintaining unit for the flying height of the magnetic head to maintain the second height in the write mode or the read mode.

Before the seek mode is complete, the controller may enable the flying height maintaining unit.

The foregoing and/or other aspects and utilities of the present general inventive concept may also be achieved by providing a hard disk drive apparatus including a disk, a magnetic head to read data of the disk or to record data on the disk, a flying height maintaining unit to control a flying height of the magnetic head and to uniformly maintain the flying height above the disk, and a controller to control the flying height maintaining unit to maintain a second height at which a write operation or a read operation is performed by the magnetic head as the flying height of the magnetic head when a seeking distance is smaller than a threshold in a seek mode.

When the seeking distance is larger than the threshold, the controller may control the flying height maintaining unit to maintain a first height that is greater than the second height as the flying height of the magnetic head in the seek mode and to maintain the second height in the write mode or the read mode.

Before the seek mode is complete, the controller may control the flying height maintaining unit to start decreasing the flying height of the magnetic head below the first height.

The foregoing and/or other aspects and utilities of the present general inventive concept may also be achieved by providing a method of controlling a flying height of a magnetic head in a hard disk drive apparatus to change the flying height of the magnetic head and to uniformly maintain the flying height, the method including determining whether the magnetic head is in a seek mode seeking a target track at which a write operation or a read operation is to be performed, when in a seek mode, controlling the magnetic head to maintain a first height as the flying height of the magnetic head, wherein the first height is greater than a second height for which a write operation or a read operation is performed by the magnetic head.

Controlling the flying height of the magnetic head may further include, after the seek mode is complete, controlling the magnetic head to maintain the second height as the flying height of the magnetic head, when the magnetic head is in a write mode or a read mode.

Controlling the flying height of the magnetic head may further include, before the seek mode is complete, controlling the magnetic head to start decreasing the flying height of the magnetic head below the first height.

The foregoing and/or other aspects and utilities of the present general inventive concept may also be achieved by providing a method of controlling a flying height of a magnetic head in a hard disk drive apparatus to uniformly maintain the flying height of the magnetic head, the method including determining whether the magnetic head is in a seek mode seeking a target track at which a write operation or a read operation is to be performed, measuring a seeking distance which is a distance between a current track position, where the magnetic head begins to seek, and a target track position when the magnetic head is in the seek mode, comparing the seeking distance with a threshold, when the seeking distance is smaller than the threshold, controlling the magnetic head to maintain the second height as the flying height of the magnetic head at which a write operation or a read operation is to be performed by the magnetic head, in the seek mode, and when the seeking distance is larger than the threshold, controlling the magnetic head to maintain a first height that is higher than the second height as the flying height of the magnetic head in the seek mode.

The foregoing and/or other aspects and utilities of the general inventive concept may also be achieved by providing a disk drive apparatus including one or more disks, a head to read data from and to write data to each of the one or more disks, and a flying height control unit to control a flying height of the head based on modes of the head to minimize head disk interference (HDI) between the head and the one or more disks.

The foregoing and/or other aspects and utilities of the general inventive concept may also be achieved by providing a method of controlling a flying height of a head in a disk drive apparatus, the method including reading data from or writing data to a disk, and controlling a flying height of the head based on modes of the head to minimize head disk interference between the disk and the head.

The foregoing and/or other aspects and utilities of the general inventive concept may also be achieved by providing a computer-readable recording medium having embodied thereon a computer program to execute a method including reading data from or writing data to a disk and controlling a flying height of the head based on modes of the head to minimize head disk interference between the disk and the head.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a plan view illustrating a hard disk drive apparatus according to an embodiment of the present general inventive concept;

FIG. 2 is a block diagram illustrating the hard disk drive apparatus of FIG. 1, according to an embodiment of the present general inventive concept;

FIG. 3 is a flowchart illustrating a method of controlling a flying height of a magnetic head in a hard disk drive apparatus according to an embodiment of the present general inventive concept;

FIG. 4 illustrates a flying height of a magnetic head in a seek mode, and a write mode or a read mode, according to an embodiment of the present general inventive concept;

FIG. 5A is a graph illustrating a moving speed of a magnetic head in a seek mode, and a write mode or a read mode, according to an embodiment of the present general inventive concept;

FIG. 5B is a graph illustrating Flying height On Demand (FOD) voltage of a hard disk drive apparatus in a seek mode, and a write mode or a read mode, according to an embodiment of the present general inventive concept; and

FIG. 5C is a graph illustrating a flying height of a magnetic head in a seek mode, and a write mode or a read mode, according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

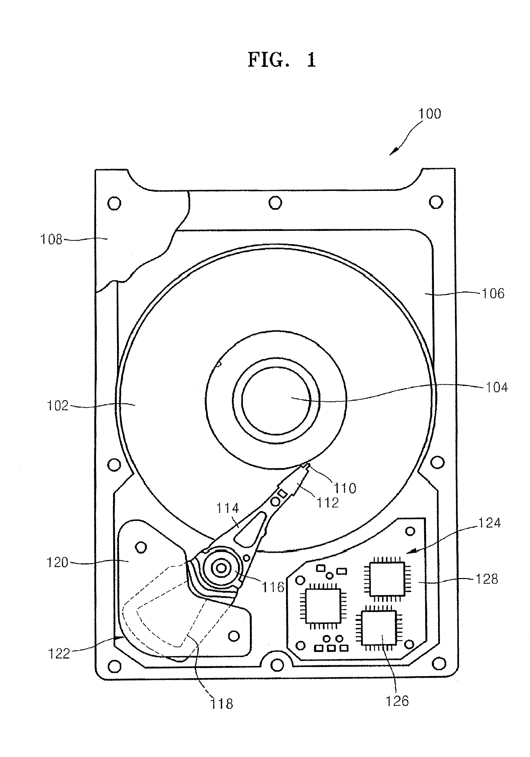

FIG. 1 is a plan view illustrating a hard disk drive apparatus according to an embodiment of the present general inventive concept.

Referring to FIG. 1, the hard disk drive apparatus 100 may include one or more magnetic disks 102 which are rotated by a spindle motor 104.

The spindle motor 104 can be mounted on a base plate 106 of the hard disk drive apparatus 100. The hard disk drive apparatus 100 may further include a cover 108 that covers the disks 102.

The hard disk drive apparatus 100 may include a plurality of heads 110. Each head 110 is disposed close to the rotating disk 102. Each head 110 may include separate write and read units (both not illustrated) that magnetize and sense the magnetic fields of the disks 102.

Each head 110 is mounted on a flexure 112 to form a Head Gimbal Assembly (HGA) and can be maintained horizontally. The flexure 112 is attached to an actuator arm 114, and the actuator arm 114 is mounted on the base plate 106 and is rotated by a bearing assembly 116.

Each head among the plurality of heads 110 has different characteristics. That is, Bit Per Inch (BPI), Track Per Inch (TPI), track per head, and sector per track are different in each head. Therefore, data transmission speed per head may be different. Such characteristics may be recorded on a system cylinder of the disk 102.

A voice coil 118 is connected to a magnetic assembly 120 to generate a Voice Coil Motor (VCM) 122. By providing a current to the voice coil 118, a torque is generated to rotate the actuator arm 114 and the heads 110 move across the surfaces of the disks 102.

The hard disk drive apparatus 100 may further include a printed circuit board assembly 124. The printed circuit board assembly 124 may include a plurality of integrated circuits 126 connected to a printed circuit board 128. The printed circuit board 128 is connected to the voice coil 118, the heads 110, and the spindle motor 104 by electric wires (not illustrated).

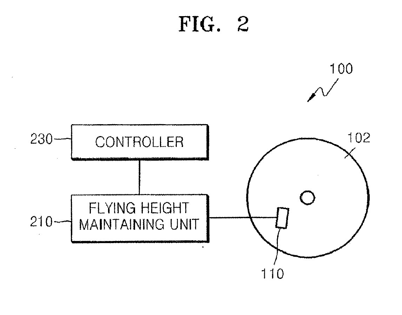

FIG. 2 is a block diagram of the hard disk drive apparatus 100 of FIG. 1, according to an embodiment of the present general inventive concept.

Referring to FIG. 2, the hard disk drive apparatus 100 includes the disk 102, the magnetic head 110, a flying height maintaining unit 210, and a controller 230. As described above, the magnetic head 110 reads data from the disk 102 or records data to the disk 102. The flying height maintaining unit 210 changes the flying height (FH) of the magnetic head 110 above the disk 102 and uniformly maintains the FH. The flying height maintaining unit 210 may be a Flying height On Demand (FOD) unit. In an embodiment of the present general inventive concept, for example, the flying height maintaining unit 210 can be embodied with the FOD unit in which a separate coil is adhered to the inside of the magnetic head 110 and a current is applied to the coil to heat the magnetic head 110, thereby forming an effective Air Bearing System (ABS) to control the FH. In another embodiment, the flying height maintaining unit 210 can function as any unit that changes the FH of the magnetic head 110 and uniformly maintains the FH.

Hereinafter, the controller 230 according to an embodiment of the present general inventive concept will be described. The controller 230 controls the flying height maintaining unit 210 to maintain a first height as the FH of the magnetic head 110, while in a seek mode. If the FH of the magnetic head 110, while the magnetic head 110 performs a write operation or a read operation, is a second height, the first height is hereinafter defined to be higher than the second height. In the seek mode, the magnetic head 110 seeks a target track at which a write operation or a read operation is to be performed. That is, where a distance between a current track position, at which seeking begins, and a target track position is a seeking distance, the seek mode is the mode in which the magnetic head 110 moves through the seeking distance. The controller 230 controls the flying height maintaining unit 210 to maintain the first height as the FH of the magnetic head 110 while in the seek mode and to maintain the second height while in a write mode or a read mode. Accordingly, the FH of the magnetic head 110 may be lowered from the first height before the seek mode is complete. As in the example described above, if the flying height maintaining unit 210 is embodied with the FOD unit, which adheres a coil to the inside of the magnetic head 110 to heat the magnetic head 110 and which controls the FH, transient response time may exist due to a thermal time constant of the coil during heating the coil. That is, after the seek mode is complete, additional time is required in order to generate FOD voltage from the FOD unit to change the FH of the magnetic head 110 from the first height to the second height. Therefore, the controller 230 according to the present embodiment generates the FOD voltage from the FOD unit before the seek mode is fully complete, so that the FH of the magnetic head 110 lowers from the first height and the FH of the magnetic head 110 can maintain the second height from when a write mode or a read mode begins.

In addition, hereinafter, an operation of the controller 230 according to another embodiment of the present general inventive concept will be described.

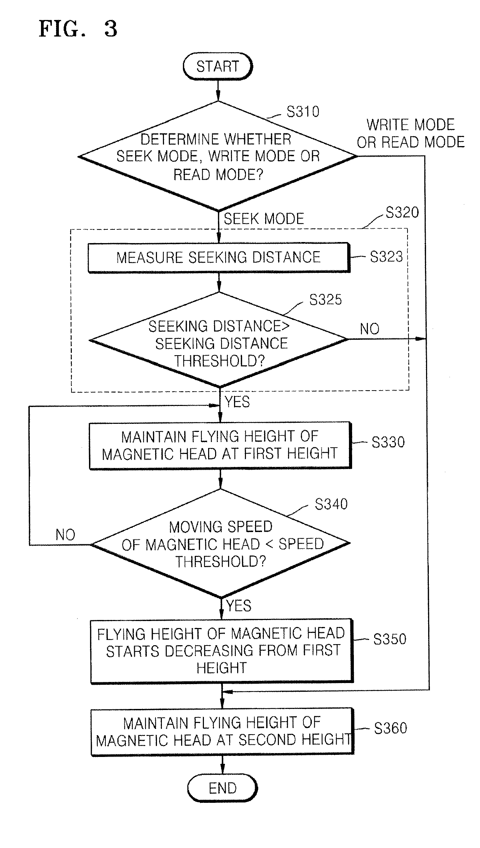

The controller 230 compares the seeking distance with a predetermined threshold in the seek mode. When the seeking distance is smaller than the threshold, the controller 230 controls the flying height maintaining unit 210 to maintain the second height as the FH of the magnetic head 110, even in the seek mode. When the seeking distance is very short, a moving distance of the magnetic head 110 is very short, and as a result the FH of the magnetic head 110 is continuously maintained at the second height, instead of being changed to the first height and then being changed to the second height. When the seeking distance is larger than the threshold, the controller 230 operates in the same manner as in the previously described embodiment. The operation of the controller 230 will now be described more fully with reference to FIG. 3.

FIG. 3 is a flowchart illustrating a method of controlling a FH of the magnetic head in a hard disk drive apparatus according to an embodiment of the present general inventive concept.

The method of controlling the FH of the magnetic head 110 in the hard disk drive apparatus 100 is described with reference to FIGS. 2 and 3.

Firstly, it is determined whether the magnetic head 110 of the hard disk drive apparatus 100 is in the seek mode, the write mode or the read mode in operation 310. If the magnetic head 110 is in the write mode or the read mode, the FH of the magnetic head 110 continuously maintains the second height in operation 360. If the magnetic head 110 is in the seek mode, the controller 230 controls the flying height maintaining unit 210 to maintain the first height as the FH of the magnetic head 110 in operation 330. Since the controller 230 disables the flying height maintaining unit 210 in operation 330, the controller 230 can control the FH of the magnetic head 110 to be the highest possible height or can control the flying height maintaining unit 210 to maintain the FH of the magnetic head 110 to be higher than the second height. While in the seek mode, the controller 230 compares the moving speed of the magnetic head 110 with a predetermined threshold, that is, a speed threshold, in operation 340. When the moving speed of the magnetic head 110 is greater than the speed threshold, the controller 230 controls the flying height maintaining unit 210 to continuously maintain the first height as the FH of the magnetic head 110. When the moving speed of the magnetic head 110 is less than the speed threshold, the controller 230 controls the flying height maintaining unit 210 to start lowering the FH of the magnetic head 110 below the first height in operation 350. The moving speed of the magnetic head 110 is lower than the speed threshold when the seek mode is nearly complete and the write mode or the read mode is about to begin. Therefore, in order to maintain the FH of the magnetic head 110 at the second height, while the write mode or the read mode begins, the controller 230 controls the flying height maintaining unit 210 to make the FH of the magnetic head 110 gradually lower before the seek mode is fully complete, that is, from when the moving speed of the magnetic head 110 is below the speed threshold.

In the method of FIG. 3, the moving speed of the magnetic head 110 is compared to a threshold. However, this is only an example and other characteristics can be used. For example, the acceleration of the magnetic head 110, the difference between the current position and the target track position, or the current applied to the VCM can be compared with a corresponding threshold. After the seek mode is complete, when the write mode or the read mode starts, the controller 230 controls the flying height maintaining unit 210 to maintain the second height as the FH of the magnetic head 110 in operation 360.

Since the flying height maintaining unit 210 is disabled in operation 330, operations 350 and 360 can be performed when the flying height maintaining unit 210 is enabled. That is, when the moving speed of the magnetic head 110 is smaller than the speed threshold, the controller 230 enables the flying height maintaining unit 210 so that the FH of the magnetic head 110 can be changed from the highest FH to the second height.

According to another embodiment of the present general inventive concept, operation 320 of FIG. 3 is added to the embodiment of the present general inventive concept. That is, when it is determined that the magnetic head 110 of the hard disk drive apparatus 100 is in the seek mode, the seeking distance is firstly measured in operation 323. The seeking distance is compared with a seeking distance threshold in operation 325. When the seeking distance is larger than the seeking distance threshold, an operation according to another embodiment is the operations 330 through 360. However, when the seeking distance is smaller than the seeking distance threshold, the controller 230 controls the flying height maintaining unit 210 to continuously maintain the FH of the magnetic head 110 at the second height, instead of changing the FH of the magnetic head 110 to the first height. As described above, when the seeking distance is very short, the moving distance of the magnetic head 110 is very short so that the FH of the magnetic head 110 is continuously maintained at the second height, instead of being changed to the first height and then being changed to the second height in operation 360.

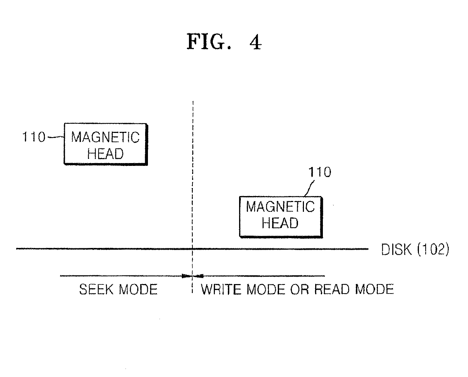

FIG. 4 illustrates a FH of the magnetic head in a seek mode, and a write mode or a read mode, according to an embodiment of the present general inventive concept.

Referring to FIGS. 2 and 4, the controller 230 controls the flying height maintaining unit 210 to maintain different heights as the FH of the magnetic head 110 when the magnetic head is in the seek mode, and the write mode or the read mode. Accordingly, in the seek mode, the FH of the magnetic head 110 is the first height and in the write mode or the read mode, the FH of the magnetic head 110 is the second height.

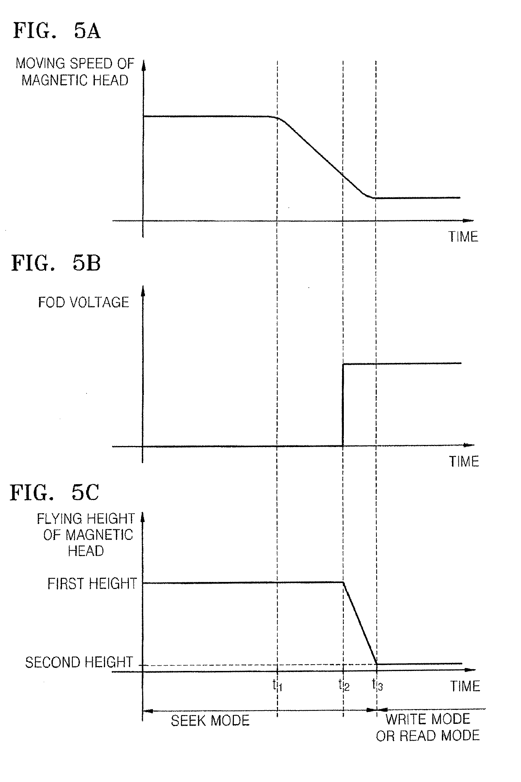

FIG. 5A is a graph illustrating a moving speed of the magnetic head in a seek mode, and a write mode or a read mode, according to an embodiment of the present general inventive concept.

FIG. 5B is a graph illustrating a FOD voltage of the hard disk drive apparatus in the seek mode, and a write mode or a read mode, according to an embodiment of the present general inventive concept.

FIG. 5C is a graph illustrating a FH of a magnetic head in a seek mode, and a write mode or the read mode, according to an embodiment of the present general inventive concept.

Referring to FIGS. 2, 3 and 5A through 5C, the moving distance of the magnetic head 110 starts decreasing at t1 and is smaller than a speed threshold at t2. Therefore, if it is assumed that the flying height maintaining unit 210 is the FOD unit, the controller 230 generates a FOD voltage from the FOD unit at t2 to control the FH of the magnetic head 110 to be changed from the first height to the second height. Accordingly, the FH of the magnetic head 110 starts decreasing from the first height at t2, and after t3 where the write mode or the read mode starts, the FH of the magnetic head 110 maintains the second height.

The hard disk drive apparatus to control the FH of the magnetic head and the method thereof according to various embodiments of the present general inventive concept minimize HDI between the magnetic head and the disk due to a decrease of the FH of the magnetic head which may occur in the seek mode of the magnetic head which seeks to perform the write operation or the read operation, so that performance degradation while recording and reading as a result of system deterioration can be prevented and reliability of a system can be improved. In addition, in order to secure an appropriate FH of the magnetic head, the time required to stabilize the FOD unit is reduced and thus performance degradation caused by the FOD unit can be minimized.

The present general inventive concept can be implemented as a method, an apparatus, and a system. The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include electronic circuits, semiconductor memory devices, ROMs, Random Access Memory (RAM), flash memories, erasable ROMs (EROMs), magnetic tapes, floppy disks, optical disks, hard disks, optical fibers, and optical storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains. The computer data signal can be any signal that can be transmitted via transmission media, such as electronic network channels, optical fibers, air, an electronic field, RF networks, etc.

Although a few embodiments of the present general inventive concept have been illustrated and described, it will be appreciated by those skilled in the art that changes may be made in these embodiments without departing from the principles of the general inventive concept, the scope of which is defined in the appended claims and their equivalents.

## Claims

1. A hard disk drive apparatus (100), comprising:
a disk (102);
a magnetic head (110) to read data from the disk (102) or to record data on the disk (102);
a flying height maintaining unit (210) to control a flying height of the magnetic head (110) and to uniformly maintain the flying height above the disk (102);
a controller (230) to control the flying height maintaining unit (210) to maintain a first height as the flying height of the magnetic head (110) in a seek mode,
wherein the first height is greater than a second height at which a write operation or a read operation is performed by the magnetic head (110).

2. The apparatus of Claim 1, wherein after the seek mode is complete, the controller (230) controls the flying height maintaining unit (210) to maintain the second height as the flying height of the magnetic head (110) in a write mode or a read mode.

3. The apparatus of Claim 1 or 2, wherein before the seek mode is complete, the controller (230) controls the flying height maintaining unit (210) to start decreasing the flying height of the magnetic head (110) below the first height.

4. The apparatus according to one of claims 1 to 3, wherein when a moving speed of the magnetic head (110), an acceleration of the magnetic head (110), a difference between a current position and a target track position, or current applied to a voice coil motor (122) is smaller than a threshold, the controller (230) controls the flying height maintaining unit (210) to start decreasing the flying height of the magnetic head (110) below the first height.

5. The apparatus according to one of claims 1 to 4, wherein when a moving speed of the magnetic head (110), an acceleration of the magnetic head (110), a difference between a current position and a target track position, or a current applied to a voice coil motor (122) is larger than a threshold, the controller (230) determines that the magnetic head (110) is in the seek mode and controls the flying height maintaining unit (210).

6. The apparatus according to one of the preceding claims, wherein the controller (230) disables the flying height maintaining unit (210) so that the first height is a greatest height among flying heights of the magnetic head (100) in the seek mode.

7. The apparatus of Claim 6, wherein the controller (230) enables the flying height maintaining unit for the flying height of the magnetic head to maintain the second height in the write mode or the read mode.

8. The apparatus of Claim 7, wherein before the seek mode is complete, the controller (230) enables the flying height maintaining unit (210).

9. The apparatus according to one of the preceding claims, wherein the flying height maintaining unit is a Flying height On Demand (FOD) unit.

10. The apparatus according to one of the preceding claims, wherein the controller (230) is configured to control the flying height maintaining unit (210) to maintain the second height at which a write operation or a read operation is performed by the magnetic head (110) as the flying height of the magnetic head (110) when a seeking distance is smaller than a threshold in a seek mode.

11. The apparatus of Claim 10, wherein when the seeking distance is larger than the threshold, the controller (230) controls the flying height maintaining unit (210) to maintain a first height that is greater than the second height as the flying height of the magnetic head (110) in the seek mode and to maintain the second height in the write mode or the read mode.

12. The apparatus of Claim 10 or 11, wherein before the seek mode is complete, the controller controls the flying height maintaining unit (210) to start decreasing the flying height of the magnetic head (110) below the first height.

13. A method of controlling a flying height of a magnetic head (110) in a hard disk drive apparatus (100) to change the flying height of the magnetic head (110) and to uniformly maintain the flying height, the method comprising:
determining whether the magnetic head (110) is in a seek mode seeking a target track at which a write operation or a read operation is to be performed;
when in a seek mode, controlling the magnetic head (110) to maintain a first height as the flying height of the magnetic head (110),
wherein the first height is greater than a second height for which a write operation or a read operation is performed by the magnetic head (110).

14. The method of Claim 13, wherein controlling the flying height of the magnetic head (110) further comprises:
after the seek mode is complete, controlling the magnetic head (110) to maintain the second height as the flying height of the magnetic head (110), when the magnetic head (110) is in a write mode or a read mode.

15. The method of Claim 14, wherein controlling the flying height of the magnetic head (110) further comprises:
before the seek mode is complete, controlling the magnetic head (110) to start decreasing the flying height of the magnetic head (110) below the first height.

16. The method of one of the claims 13 to 15, wherein controlling the flying height of the magnetic head (110) further comprises:
when a moving speed of the magnetic head (110), an acceleration of the magnetic head (110), a difference between a current position and a target track position, or current applied to a voice coil motor (122) is smaller than a threshold, controlling the magnetic head (110) to start decreasing the flying height of the magnetic head (110) below the first height.

17. The method of one of claims 13 to 16, wherein it is determined that the magnetic head (110) is in the seek mode when a moving speed of the magnetic head (110), an acceleration of the magnetic head (110), a difference between a current position and a target track position, or current applied to a voice coil motor (122) is larger than a threshold.

18. A method of controlling a flying height of a magnetic head (110) in a hard disk drive apparatus (100) to uniformly maintain the flying height of the magnetic head (110), the method comprising:
determining whether the magnetic head (110) is in a seek mode seeking a target track at which a write operation or a read operation is to be performed;
measuring a seeking distance which is a distance between a current track position, where the magnetic head (110) begins to seek, and a target track position when the magnetic head (110) is in the seek mode;
comparing the seeking distance with a threshold;
when the seeking distance is smaller than the threshold, controlling the magnetic head (110) to maintain the second height as the flying height of the magnetic head (110) at which a write operation or a read operation is to be performed by the magnetic head (110), in the seek mode; and
when the seeking distance is larger than the threshold, controlling the magnetic head (110) to maintain a first height that is higher than the second height as the flying height of the magnetic head (110) in the seek mode.

19. The method of Claim 18, wherein controlling the flying height of the magnetic head (110) further comprises:
after the seek mode is complete, controlling the magnetic head (110) to maintain the second height as the flying height of the magnetic head (110), when the magnetic head (110) is in a write mode or a read mode.

20. The method of Claim 18 or 19, wherein controlling the flying height of the magnetic head (110) further comprises:
before the seek mode is complete, controlling the magnetic head (110) to start decreasing the flying height of the magnetic head (110) below the first height.
